Europäisches Patentamt

European Patent Office

Office européen des brevets

(11) Publication number: **0 257 955**
**A2**

## EUROPEAN PATENT APPLICATION

(21) Application number: **87307273.0**

(22) Date of filing: **18.08.87**

(51) Int. Cl.⁴: **G 01 N 21/84**
**G 01 N 33/00**

(30) Priority: **19.08.86 GB 8620193**

(43) Date of publication of application:
**02.03.88 Bulletin 88/09**

(84) Designated Contracting States:
**AT BE CH DE ES FR GB GR IT LI LU NL SE**

(71) Applicant: **THORN EMI PLC**
**Thorn Emi House Upper Saint Martin's Lane**
**London, WC2H 9ED (GB)**

(72) Inventor: **Webb, Brian Christopher**
**Flint Cottage Darby Gardens**
**Sunburry Middlesex (GB)**

**Daniels, Phelim Brinley**
**38A, Argyle Avenue**
**Hounslow Middlesex (GB)**

(74) Representative: **Marsh, Robin Geoffrey et al**
**Thorn EMI Patents LImited The Quadrangle Westmount**
**Centre Uxbridge Road**
**Hayes Middlesex, UB4 0HB (GB)**

(54) **Chemical sensor.**

(57) A chemically-sensitive surface plasmon resonance device comprises a slab (11) of a light-transmissive material (e.g. perspex) having a layer (14) of a metal on one side and a plurality of ridges (13) on the opposite side. A layer (15) of a chemically sensitive material is formed on the metal layer. White light incident on the ridges undergoes reflection at the interface of the slab (11) and metal layer (14) and is dispersed as it leaves the slab. Exposure of the chemically sensitive layer (15) to an analyte causes a change, as a function of wavelength of reflected light, of a plasmon resonance absorption.

FIG. 4

## Description

### CHEMICAL SENSOR

This invention relates to a chemical sensor and it relates particularly to a chemically-sensitive surface plasmon resonance device.

Surface plasmon resonance (SPR) can arise when photons are reflected at a dielectric/metal interface under conditions such that the momentum of the photons becomes coupled to the electron gas in the metal thereby exciting collective longitudinal oscillations known as plasmons.

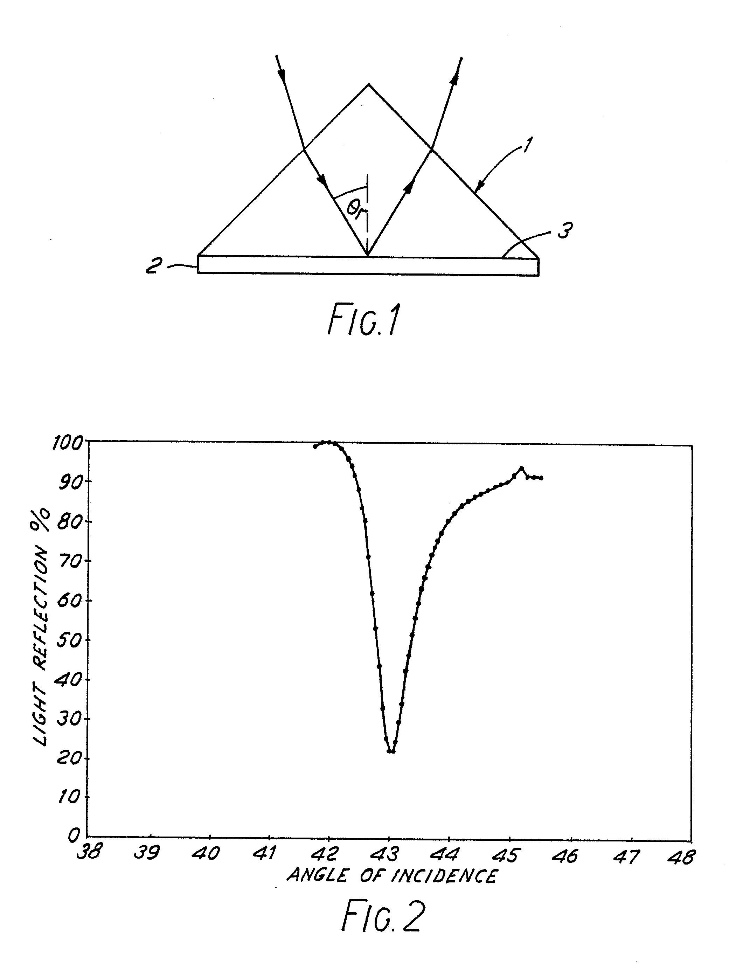

Figure 1 of the accompanying drawings shows a known SPR configuration, referred to as "Kretschmann's Arrangement", which comprises a glass prism 1 with a thin metal layer 2 attached to one face of the prism. Attainment of a resonance condition depends on a number of operational and constructional parameters. In an example, layer 2 is 30nm thick and is made of silver and the prism has a refractive index of 1.517. Assuming operation in air, surface plasmons can be excited in the metal layer if light at a wavelength of 633 nm (i.e. He-Ne laser light) is incident at the glass/metal interface 3 at an angle $\Theta_r$ of 43°.

As illustrated in Figure 2 of the drawings a resonance absorption, due to excitation of plasmons in metal layer 2, can be observed as a sharp dip in the intensity of light reflected at the interface as a function of incidence angle. The shape and angular position of the dip are found to be extremely sensitive to the dielectric properties of the medium immediately adjacent to the exposed surface of layer 2, remote from the prism, and this fact has been exploited in a chemical sensor.

In experiments described by Nylander, Liedberg and Lind in "Sensors and Actuators" Vol 7 1982 p79, Kretschmann's Arrangement was used to detect a halogenated hydrocarbon gas, halothane. A thin film of silicone-glycol copolymer, an oil which reversibly absorbs halothane, was applied to the exposed surface of metal layer 2. Absorption of the gas produced a change in the dielectric properties of the oil which, in turn, gave rise to a detectable shift in the angular position of the resonance absorption, the extent of the shift being related linearly to the concentration of gas absorbed, at least over a limited range of concentrations.

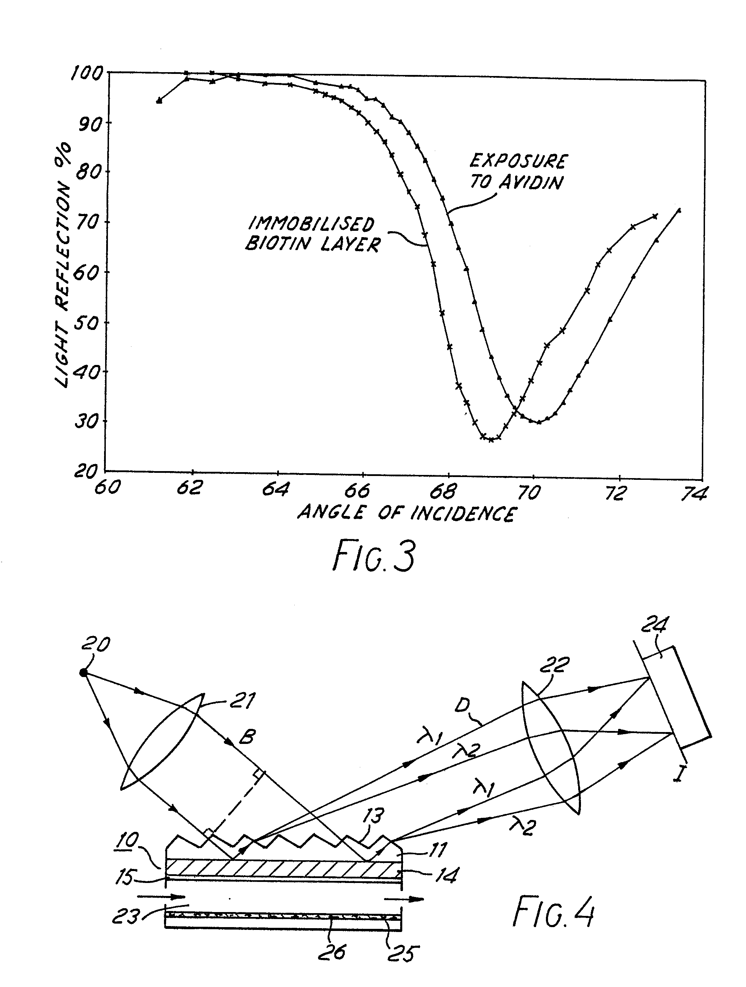

Similarly, a system based on Kretschmann's Arrangement can be used as an immunosensor and, in an example, an immune specific protein (biotin) was immobilised by silane coupling at the exposed surface of layer 2 by means of an intervening coating of silicon dioxide which acts as an adhesion aid. The immobilised layer was then incubated with the appropriate target molecule in solution (avidin) producing a detectable shift in the resonance absorption curve. This shift is shown in Figure 3.

It will be apparent, therefore, that by application of a suitable chemically-sensitive film it is possible to monitor the presence and/or concentration of a wide range of analytes both in the gaseous phase and in solution.

In practice, it is convenient to monitor reflectivity at a fixed angle of incidence. However, because the shape and angular position of the resonance absorption depends critically on the characteristics (e.g. thickness, composition) of materials deposited on the prixm, a sensor of the kind described hereinbefore would need to be carefully calibrated, possibly against standard references, and the angle of incidence may need to be re-adjusted prior to each new measurement. Both of these procedures would necessitate some form of mechanical movement arranged to rotate the prism relative to the laser and a detector adding to the mechanical complexity and cost of the system and tending to reduce overall reliability and ease of use.

It is an object of the present invention to provide a chemical sensor based on the SPR technique which at least alleviates the above-mentioned problems associated with calibration and adjustment of the system and which is amenable to reliable manufacturing techniques consistent with large scale commercial production.

According to a first aspect of the invention there is provided a chemically-sensitive surface plasmon resonance device comprising a slab of a light-transmissive material being flat on one side and having a plurality of formations on the opposite side, a layer of a metal formed on said one side of the slab and a layer of a chemically-sensitive material formed on, or in the vicinity of, said metal layer,

whereby, in use, white light incident on said formations undergoes reflection at the interface of said one side and said metal layer and, after reflection, undergoes dispersion as the light leaves said opposite side and in a resonance condition of the device, exposure of said chemically-sensitive material to an analyte causes a detectable change, as a function of the wavelength of the reflected light, of the position of a plasmon resonance absorption.

It will be appreciated that in contrast to prior devices which exhibit a variation of reflectivity as a function of incidence angle a device in accordance with the present invention exhibits a variation of reflectivity as a function of wavelength. By arranging that a collimated beam of white light (i.e. light containing a range of wavelengths in the visible part of the spectrum) is incident at said interface at an angle which is approximately commensurate with the resonance condition it will always be possible, in principle, to find a wavelength in the dispersed beam which is precisely consistent with achieving the maximum resonance absorption condition. This wavelength can be identified by focussing the dispersed beam at an image plane and scanning a response characteristic of a suitable detection system relative to the spectrally dispersed image. Such scanning could be accomplished electrically by interrogating the outputs of an array of charge coupled devices, for example, thereby eliminating the need for mechanical movement of a prixm whether for the purpose of calibrating the device or identifying the resonance condition.

According to another aspect of the invention there is provided a chemically-sensitive surface plasmon resonance system comprising a chemically-sensitive surface plasmon resonance device according to said first aspect of the invention, a source for producing a collimated beam of white light incident on said opposite side, means to focus, at an image plane, a dispersed beam exitant from said opposite side and detection means having a response characteristic which can be scanned electrically relative to said image plane.

Said slab which constitutes an optical component of the device may be made from any of a number of commercially available, optical quality materials, and devices may be manufactured in quantity, at low cost, by employing planar processing techniques. A metal layer and, if desired, a chemically-sensitive layer may be formed by suitable deposition techniques on a suitably moulded sheet of said optical quality material containing a plurality of optical components, the sheet then being sectioned to separate individual devices.

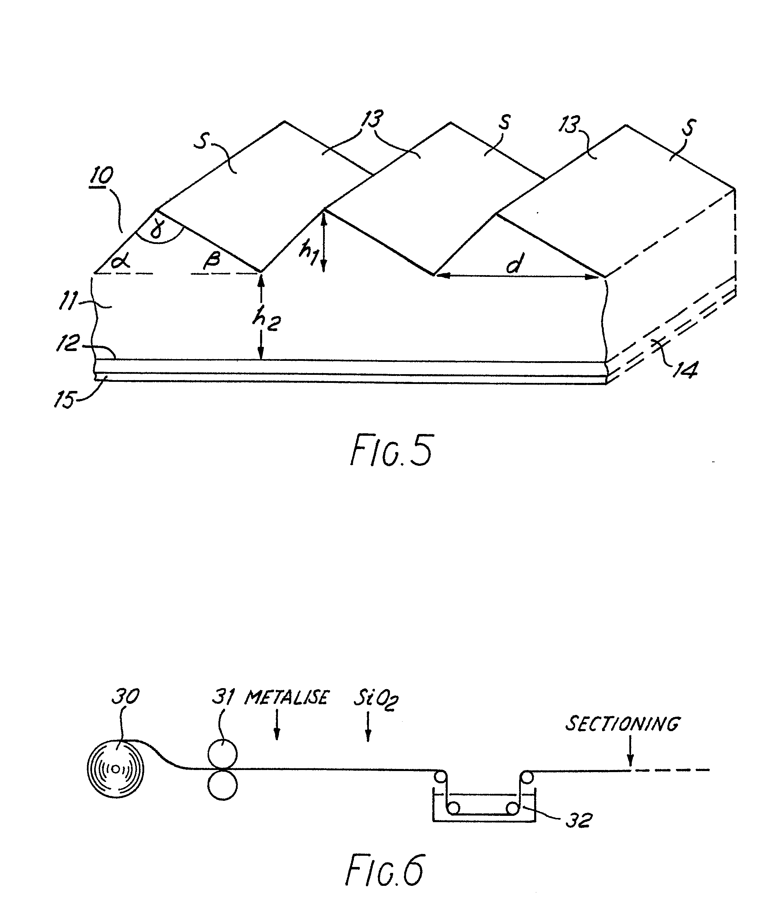

In order that the invention may be carried readily into effect an embodiment thereof is now described in detail, by way of example only, by reference to Figures 4 to 6 of the accompanying drawings of which, Figure 1 illustrates a SPR system, known to those skilled in the art as Kretschmann's Arrangement, Figure 2 shows a plot of reflectivity against angle of incidence produced using the system of Figure 1, Figure 3 shows two plots of reflectivity against angle of incidence produced using an immunosensor based on the system of Figure 1, Figure 4 shows a chemically-sensitive system in accordance with the present invention, Figure 5 shows a cross-sectional view through a device used in the system of Figure 4, and Figure 6 illustrates a possible process for manufacturing a device in accordance with the invention.

Referring to Figure 4, a chemically-sensitive surface plasmon resonance system comprises a chemically-sensitive surface plasmon resonance device, shown generally at 10, a source 20 of white light in combination with a lens system 21 designed to produce a collimated beam B incident on the device and a further lens system 22 designed to focus a dispersed beam D at an image plane I.

Referring now to Figure 5, the device 10 comprises a generally rectangular slab 11 of a suitable optical quality mouldable material. The material used should be of a uniform, isotropic composition, should have an appropriate refractive index commersurate with achieving the plasmon resonance condition and should be readily fabricated. Suitable materials include thermoplastics materials, perspex, cold cure epoxy and glass. The slab is flat on one side 12 and is formed with a number of parallel, evenly spaced ridges 13 on the opposite side. In this example, the ridges, which are generally triangular, in cross-section are defined by respective pairs of flat, mutually inclined surfaces (e.g. S). The angles $\alpha$, $\beta$, $\gamma$ subtended by respective sides of the ridges may be chosen to achieve a desired degree of refraction or dispersion as required by a particular application.

Typically the pitch d of the ridges might be 0.1mm,

the depth $h_1$ of the ridges being typically 0.1mm and the depth $h_2$ of the slab being about 1mm. It will be understood, however, that different dimensions, consistent with achieving dispersion, could be used, and the ridges need not necessarily be spaced apart from one another evenly nor need they be precisely triangular.

Side 12 of the slab carries a thin reflective layer 14 of a suitable metal (eg Ag) in which surface plasmons are to be excited and a layer 15 of a chemically-sensitive material may be deposited on the metal layer on the side thereof remote from the slab. The chemically-sensitive material is chosen to respond to a desired analyte which is arranged to pass through a cell 23, as shown in Figure 4. The response of the chemically-sensitive material causes a change of dielectric property, and so refractive index, of the environment immediately adjacent to layer 14 and, as described hereinbefore, this change produces a detectable shift in the position of maximum resonance absorption as a function of the wavelength of reflected light.

If the analyte is a gas or vapour, layer 15 may comprise an appropriate chemisorbent, absorbent or adsorbent coating. If the analyte comprises ions in solution, layer 15 may comprise an electro-active membrane e.g. glass, PVC/valinomycin (for K+ions). Alternatively, if the device is to be used as a immunosensor, immunologically active molecules of a suitable antibody/antigen may be immobilised on layer 14 by means of a suitable adhesion aid such as silicon dioxide. In an alternative arrangement layer 15 may be formed as an enzyme substrate 26 on wall 25 of cell 23, as shown, to define a narrow channel in the cell along which the analyte may pass. In this case the enzyme is chosen to convert the analyte to a product which causes a change of bulk refractive index of the analyte solution, detectable as a shift in the position of the maximum resonance absorption.

Numerous examples of other suitable chemically-sensitive materials will be readily envisaged by persons of ordinary skill in the art.

Referring to Figure 4, the collimated beam B is incident at right angles to respective parallel surfaces of ridges 13. The beam is reflected at the interface of slab 11 and metal layer 14 and is then dispersed as it exits from the slab to form the dispersed beam D which is focussed at image plane I. For clarity of illustration, only two wavelengths are represented in Figure 4. By arranging that beam B is incident at the interface at an angle which is approximately commersurate with a resonance condition it will always be possible, in principle, to find one wavelength in the dispersed beam which is precisely consistent with achieving the maximum resonance absorption condition. This wavelength can be identified by scanning a response characteristic of a detection system 24 relative to the spectrally dispersed image of source 20 formed at the image plane thereby to detect the resonance absorption maximum. Such scanning can be achieved electrically using any of a number of known detection systems e.g. CCD photodiode array, vidicon tube. It is possible, therefore, to calibrate the sensor against any desired reference without recourse to mechanical adjustment demanded in the prior arrangements described hereinbefore. Moreover, with the aid of suitable processing circuits the reflectance spectrum, scanned by the detection system, may be analysed numerically thereby to monitor changes in the shape and/or position of the resonance absorption curve caused by exposure of the chemically-sensitive material to an analyte under test. This object may be assisted by generating a second, reference reflectance spectrum by treating one half only of layer 14 with the chemical-sensitive material.

Quite apart from its dispersive function, optical component 10 is advantageous in that it can be readily manufactured in quantity and at low cost. Initially, a large number of components may be manufactured as a single sheet, up to 250 mm x 250 mm in area say, by conventional techniques - hot moulding in the case of a thermoplastics material or solution casting over a former in the case of perspex, for example. Metallic and chemically-sensitive layers are applied to the sheet, as desired, by suitable planar processing techniques and the sheet is then sectioned to produce individual devices each in the size range from 5 mm x 5 mm to 20 mm x 20 mm, say. Thus, as many as 2500 individual devices could be processed simultaneously.

Devices could be manufactured by means of a "continuous" process illustrated schematically in Figure 6. In this case, a strip of a flexible, optical quality material would be fed from a reel 30 through suitably shaped, heated rollers 31 to impress the strip with a pattern of ridges (13 in Figure 5). A metal layer is then deposited, by evaporation, for example, on the plain side of the strip followed, if desired, by deposition of an adhesion aid (e.g. $SiO_2$) by sputtering for example. If appropriate the treated strip would be passed through a bath 32 containing a silanising agent (to promote antibody coupling) prior to sectioning the strip to separate the individual devices.

It will be appreciated that with a suitable choice of chemically-sensitive material a device in accordance with the present invention can be used to monitor a wide range of chemical properties including ion activity and concentration, presence and concentration of enzymes, substrates, antibodies, antigens, haptens, hormones and reducible gases, and the presence, concentration and activity of any of a variety of chemical and biochemical substances in the gaseous phase and in solution. Moreover, the analyte is remote from the light beam and this can be advantageous in the case of an opaque solution such as blood which might otherwise interfere with reflectivity measurements.

**Claims**

1. A chemically-sensitive surface plasmon resonance device comprising a slab of a light-transmissive material being flat on one side and having a plurality of formations on the opposite side, a layer of a metal formed on said one side of the slab and a layer of a chemically-sensitive material formed on, or in the vicinity of, said metal layer, whereby, in use, white light incident on said formations undergoes reflection at the interface of said one side and said metal layer and, after reflection, undergoes dispersion as the light leaves said opposite side and in a resonance condition of the device, exposure of said chemically-sensitive material to an analyte causes a detectable change, as a function of the wavelength of the reflected light, of the position of a plasmon resonance absorption.

2. A chemically-sensitive surface plasmon resonance device according to Claim 1 wherein said formations comprise parallel ridges defined by respective pairs of flat, mutually inclined surfaces

3. A chemically-sensitive surface plasmon resonance device according to Claim 1 or Claim 2 wherein said slab is made of a mouldable optical quality material.

4. A chemically sensitive surface plasmon resonance device according to any one of Claims 1 to 3 including a cell for containing said analyte, said layer of a chemically-sensitive material being formed on a wall of the cell thereby to be in contact with the analyte.

5. A chemically-sensitive surface plasmon resonance device according to Claim 4 wherein said metal layer and said layer of a chemically-sensitive material are formed on different walls of the cell.

6. A chemically-sensitive surface plasmon resonance device according to Claim 5 wherein said chemically-sensitive material is an enzyme substrate.

7. A chemically-sensitive surface plasmon resonance device according to any one of Claims 4 to 6 wherein said cell is a flow-through cell.

8. A chemically-sensitive surface plasmon resonance system comprising a chemically-sensitive surface plasmon resonance device according to any one of Claims 1 to 7, a source for producing a collimated beam of white light incident on said opposite side, means to focus, at an image plane, a dispersed beam exitant from said opposite side and detection means having a response characteristic which can be scanned electrically relative to said image plane.

9. A chemically-sensitive surface plasmon resonance system according to Claim 8 wherein a part only of said layer of a metal is treated with said chemically-sensitive material enabling a reference dispersed beam to be formed.

10. A method of manufacturing a chemically-sensitive surface plasmon device according to any one of Claims 1 to 7 including the steps of producing a sheet comprising a plurality of said slabs, forming a layer of a metal on said sheet, thereby to cover, at least partially, said one side of each slab sectioning the sheet to separate individual devices and providing said layer of a

7 **0 257 955** 8

chemically-sensitive material either before or after sectioning.

11. An optical component suitable for use in a chemically-sensitove surface plasmon resonance device according to any one of Claims 1 to 7 the optical component comprising a slab of light-transmissive material which is flat on one side and is formed on the opposite side with a plurality of parallel ridges defined by respective pairs of flat, mutually inclined surfaces.

0257955

Fig.1

Fig.2

FIG.3

FIG.4

0257955

FIG.5

FIG.6